Europäisches Patentamt

European Patent Office

Office européen des brevets

(19)

(11) Publication number : **0 332 353 B1**

(12) **EUROPEAN PATENT SPECIFICATION**

(45) Date of publication of patent specification :
25.03.92 Bulletin 92/13

(51) Int. Cl.⁵ : **B01J 3/06, C01B 31/06**

(21) Application number : **89302152.7**

(22) Date of filing : **03.03.89**

(54) **A method of synthesizing diamond.**

(30) Priority : **08.03.88 JP 52602/88**

(43) Date of publication of application :
**13.09.89 Bulletin 89/37**

(45) Publication of the grant of the patent :
**25.03.92 Bulletin 92/13**

(84) Designated Contracting States :
**DE GB**

(56) References cited :
**EP-A- 0 041 433**
**GB-A- 1 541 847**
**US-A- 2 947 609**
**US-A- 4 547 257**
**US-A- 4 632 817**

(73) Proprietor : **SUMITOMO ELECTRIC INDUSTRIES, LTD.**
**5-33, Kitahama 4-chome, Chuo-ku**
**Osaka-shi, Osaka 541 (JP)**

(72) Inventor : **Yoshida, Katsuhito c/o Itami Works of**
**Sumitomo Electric Ind. Ltd. 1-1, Koyakita 1-chome**
**Itami-shi Hyogo (JP)**
Inventor : **Tsuji, Kazuo c/o Itami Works of**
**Sumitomo Electric Ind. Ltd. 1-1, Koyakita 1-chome**
**Itami-shi Hyogo (JP)**

(74) Representative : **Cross, Rupert Edward Blount et al**
**BOULT, WADE & TENNANT 27 Furnival Street**
**London EC4A 1PQ (GB)**

EP 0 332 353 B1

## Description

## BACKGROUND OF THE INVENTION

1. Field of the Invention

This invention relates to a synthesis process of diamond whereby in particular, large-sized and plate-shaped diamond can be synthesized with a low cost using an ultra-high pressure apparatus.

2. Description of the Prior Art

The synthesis method of diamond single crystal at an ultra-high pressure and high temperature, well known in the art, can be classified into the following two methods.

The first method is called "temperature gradient method" which method comprises using transition metal elements such as Fe, Co, Ni, Cr, Mn, Pt, etc. or alloys thereof as a solvent metal, disposing a carbon source and seed crystal at both the ends of the solvent metal so that the carbon source and seed crystal are not in contact with each other, providing a temperature difference in the solvent metal to maintain the temperature of the seed crystal relatively lower than that of the contact surface of the carbon source and solvent metal and allowing this assembly to stand at a high temperature and high pressure to grow epitaxial diamond on the seed crystal (U.S. Patent Nos. 4,034,066 and 4,632,817).

The second method is called "thin solvent film method" which method comprises putting a reaction system consisting of a mixture of a non-diamond carbon source powder, solvent metal powder and seed crystal or a reaction system consisting of a laminate of a non-diamond carbon source plate and solvent metal plate under such a temperature and pressure condition that diamond is thermodynamically stable and thereby converting the non-diamond carbon source into diamond through the thin solvent film in a short time (U.S. Patent Nos. 2,947,608; 2,947,609; 2,947,610; and 4,128,625).

As well known in the art, the temperature gradient method of the above described prior art methods is capable of synthesizing a large grain size crystal, but on the other hand, it has the following problems:

(1) The synthesis takes a very long time, so the operation of the apparatus requires a high cost.

(2) Since it is necessary to provide a temperature gradient in a sample chamber, an available volume thereof for the synthesis is small and a small number of crystals can only be synthesized, thus resulting in an increased production cost per one crystal.

In the thin solvent film method, on the contrary, the above described problem (2) can be solved, but complete prevention of spontaneous nucleation is impossible. Therefore, even if the synthesis time is lengthened, it is difficult to synthesize a large grain size crystal and moreover, the synthesized crystal is inferior in quality, for example, contaminated with much inclusion.

## SUMMARY OF THE INVENTION

It is an object of the present invention to provide a synthesis method of diamond whereby the above described disadvantages of the prior art can be overcome.

It is another object of the present invention to provide a process of synthesizing diamond with a large grain diameter and high quality in economical manner.

It is a further object of the present invention to provide an improved diamond synthesis method by the thin film of the solvent metal.

These objects can be attained by a method of synthesizing diamond using the thin film of the solvent metal in a reaction system comprising diamond seed crystal, a carbon source and a solvent metal, characterized in that one or more masses of the solvent metal are arranged independently of each other and the diamond seed crystal is arranged in such a manner that only one surface of the diamond seed crystal is contacted with the mass of the solvent metal.

## BRIEF DESCRIPTION OF THE DRAWINGS

The accompanying drawings are to illustrate the principle and merits of the present invention.

Fig. 1 is a cross-sectional view of one embodiment of the present invention for the purpose of illustrating the construction of the reaction system.

Fig. 2 is a cross-sectional view along line a - a' in Fig. 1.

Fig. 3 is a cross-sectional view of another embodiment of the present invention for the purpose of illustrating a plurality of the reaction systems of Fig. 1, stacked or laminated.

## DETAILED DESCRIPTION OF THE INVENTION

The inventors have made various efforts to solve the above described problems and consequently, have come to a conclusion that the thin solvent film method is more preferably for the synthesis of diamond crystal with a grain diameter of 1 to 2 mm. Thus, the inventors have made further studies on improvement relating to the thin solvent film method, in particular, the mechanism of spontaneous nucleation and have found that the spontaneous nucleation takes place in a solvent metal that is not required for the growth of diamond from a seed crystal and an inclusion in the resulting diamond tends to enter through the boundary between the solvent metal and seed crystal disposed therein. The present invention is based on this finding, i.e., the concept that such an inclusion can be reduced by carrying out the growth of diamond in such a manner that only one surface of the seed crystal is contacted with the solvent metal.

Accordingly, the present invention provides a method of synthesizing diamond by the thin solvent film method in a reaction system wherein diamond seed crystal, a carbon source and a solvent metal coexist, in which at least one mass of the solvent metal is arranged independently of each other and the diamond seed crystal is arranged in such a manner that one surface of the diamond seed crystal is contacted with the mass of the solvent metal.

In some preferred embodiments of the present invention, for example, (1) solvent metal masses are distributed and disposed in a carbon source (2) diamond seed crystal is buried in a separation material not reactive with the solvent metal and carbon source and (3) through the separation material are stacked or laminated a plurality of reaction systems in each of which one or more solvent metal masses are arranged independently of each other and diamond seed crystals are arranged in such a manner that only one surface of each diamond seed crystal is contacted with one of the solvent metal masses.

According to the present invention, there is provided an improved thin solvent film method. That is, in a method of growing diamond from a seed crystal comprising allowing diamond seed crystal, a carbon source and a solvent metal to coexist to form a reaction system, maintaining the reaction system under such a condition that diamond is thermodynamically stable at a temperature of higher than the melting point of the solvent metal and thereby converting the carbon source such as graphite into diamond through the difference of solubility between diamond and the carbon source such as graphite in the solvent at a constant temperature and pressure, i.e. difference of chemical potential, the quantity of the solvent metal required for the seed crystal is adjusted to as little as possible and the diamond seed crystal is arranged in such a manner that only one surface of the seed crystal is contacted with the solvent metal, whereby to prevent the solvent metal from spontaneous nucleation and the diamond from inclusion and to synthesize large size diamond.

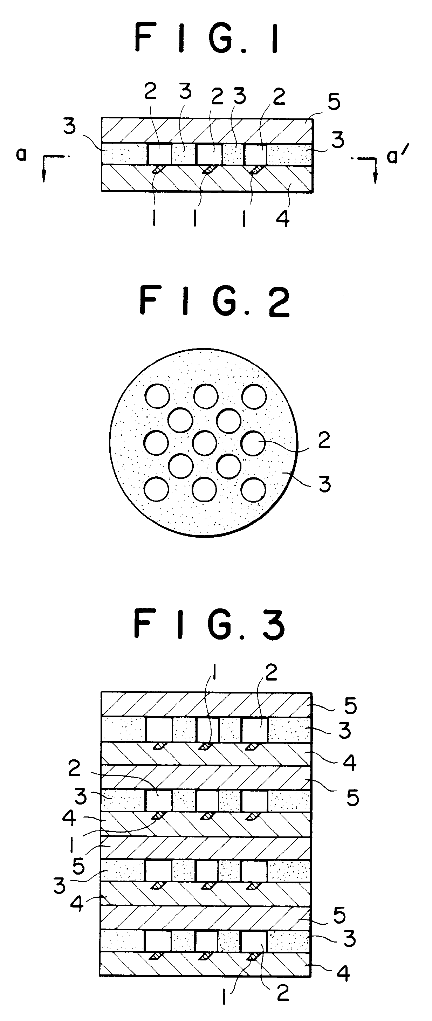

The preferred embodiments of the present invention will now be illustrated in detail referring to the accompanying drawings. Fig. 1 is a cross-sectional view of a reaction system as one embodiment of the present invention and Fig. 2 is a cross-sectional view along the line a - a' in Fig. 1. One or more diamond seed crystals 1 are buried in the surface of a plate-shaped separation material 4 in such a manner that only one surface of the diamond seed crystal is exposed from the surface aids of the separation material. The same number of solvent metal masses 2 as that of the diamond seed crystals are disposed in a carbon source 3 so as to be separated from each other by the carbon source 3 in such a manner that each of the solvent metal masses 2 is contacted with each of the diamond seed crystals 1, thereby forming a reaction system, and another separation material 5 is also put on the upper parts of the carbon source 3 and solvent metal 2. Fig. 3 is a cross-sectional view of an assembly composed of a plurality of the reaction systems as shown in Fig. 1. This assembly is charged in a sample capsule of NaCl and then subjected to reaction at a high temperature and high presure.

As the diamond seed crystal in the present invention, for example, there can be used commercially available diamond grains for diamond wheel, ordinarily having a grain size of 200 to 840 $\mu$m. As the solvent metal in the present invention, for example, there can be used Group VIII elements of Periodic Table such as Fe, Co and Ni, Cr and Mn in the form of elements or alloys thereof. Useful examples of the alloys are Fe-40Ni-10Co, Ni-30C, etc. This solvent metal is preferably used in an amount minimized but required for the growth of diamond per one seed crystal, which can for example be determined as follows: The diameter of the solvent metal is ideally determined based on a grown crystal at which the present invention aims and is generally determined from the following range:

$$4\sqrt{d_2} > d_1 \geqq 2\sqrt{d_2}$$

wherein $d_1$ = diameter of solvent metal and $d_2$ = diameter of grown crystal according to the present invention. In addition, the thickness of the solvent metal is adjusted to the same as that of the grown crystal according to the present invention.

The seed crystal is buried in a separation material so that it be arranged substantially at the central part of the solvent metal and separated from a carbon source by the solvent metal. As the carbon source, for example, there can be used artificial high purity graphite plates and high purity graphite powders pressed in plates.

Useful examples of the separation metal, provided as shown in Fig. 1 to Fig. 3, are NaCl, MgO, $Al_2O_3$, AlN, $ZrO_2$, mica and the like. This separation material is generally used in the form of a disk with a thickness of about 1 mm, prepared by pressing NaCl, MgO or $Al_2O_3$ powder. If the thickness is less than 1 mm, the solvent metal cannot function.

The reaction system of the present invention is composed as described above and then charged in a NaCl capsule, followed by subjecting to such high pressure and high temperature conditions as to grow diamond crystals in the similar manner to the ordinary thin solvent film method. During the same time, for example, the NaCl capsule is maintained at a temperature of 1400°C and a pressure of 55 Kb using a pyrophyllite pressure medium in an ultra-high pressure apparatus of belt type. This reaction time mainly depends on the size of a diamond crystal to be synthesized.

In the present invention, one reaction system is generally constructed of a carbon source, a solvent metal in a required but minimized quantity and a seed crystal and disposed to be separated from other reaction systems by a separation material so that the reaction systems do not interfere with each other. According to the construction and arrangement of the reaction systems of the present invention, spontaneous nucleation can be prevented because (1) an unnecessary solvent is removed to reduce a space for the spontaneous nucleation and (2) the flow of carbon atoms is in a constant direction of from the carbon source to the seed crystal so that localized increase in carbon concentration does not occur at other portions than the seed crystal.

When a seed crystal is disposed in a solvent metal as in the prior art method, boundary portions between the seed crystal and solvent metal cause an inclusion. In the present invention, however, only one surface of a seed crystal is utilized and accordingly, such an inclusion can markedly be reduced.

Furthermore, since it is not necessary to provide a temperature distribution in a sample chamber in the method of the present invention, the volume of the sample chamber can be effectively be utilized and a number of crystals can simultaneously be synthesized as shown in Fig. 3.

As illustrated above, in the synthesis method of diamond according to the present invention, diamond crystals are grown one by one in a plurality of solvent metal masses separated from each other in contact with the solvent in such an amount that only one surface of the diamond seed crystal requires. Therefore, large-sized diamond single crystals with less inclusion and higher quality and with a size of 1 to 2 m can be obtained in large amounts by one synthesis. In this sense, the method of the present invention is very excellent in cost and practical use.

The following examples are given in order to illustrate the present invention in greater detail without limiting the same.

Example 1

Diamond was synthesized in the reaction systems laminated according to the present invention as shown in Fig. 3. As a carbon source for a raw material, an artificial high purity graphite plate with a diameter of 20 mm and height of 1 mm was prepared in which 13 penetrating holes with a diameter of 1.5 mm were made. Disks each having a diameter of 1.5 mm and height of 1 mm and consisting of Fe-50Ni were prepared as a solvent metal and filled in these holes as shown in Fig. 2. Using commercially available diamond grains for diamond wheels (30/40 US mesh) as seed crystals and an $Al_2O_3$ powder compact with a diameter of 20 mm and height of 1 mm as a separation material, the seed crystals were buried in the separation material and combined with the solvent metal in such a manner that the seed crystal and solvent metal were contacted through one surface, thus preparing a reaction system. The thus obtained reaction systems were tacked in five stages, charged in an NaCl capsule and then subjected to reaction at a pressure of 55 Kb and a temperature of 1350°C for 8 hours in an ultra-high pressure apparatus of belt type.

Consequently, diamond grew from all of the 65 seed crystals and good quality diamond single crystals with less inclusion were thus obtained in a total quantity of about 400 mg, of which the 41 single crystals were concentrated in a grain size of 14/16 US mesh (grain diameter of 1.2 to 1.5 mm).

Example 2

Synthesis of diamond according to the present invention was carried out in an analogous manner to Example 1 except that the reaction time was 12 hours, thus obtaining good quality diamond single crystals with less inclusion in a total quantity of about 350 mg, of which the 29 single crystals were concentrated in a grain size of 12/14 US mesh (grain diameter of 1.5 to 1.7 mm).

**Claims**

1. A method of synthesizing diamond using a thin film of a solvent metal in a reaction system comprising diamond seed crystals, a carbon source and a solvent metal, characterised in that one or more masses of the solvent metal are arranged independently of each other and the diamond seed crystals are arranged in such a manner that only one surface of each diamond seed crystal contacts the mass of the solvent metal.

2. A method as claimed in Claim 1, wherein the solvent metal masses are distributed and disposed in the carbon source.

3. A method as claimed in Claim 1 or Claim 2, wherein the diamond seed crystals are buried in a separation material which is not reactive with the solvent metal and carbon source.

4. A method as claimed in any one of the preceding claims, wherein a plurality of reaction systems are stacked or laminated through a separation material which is not reactive with the solvent metal and the carbon source, each reaction system comprising at least one or more solvent metal masses arranged independently of each other and diamond seed crystals arranged in such a mariner that only one surface of each diamond seed crystal contacts the solvent metal mass.

5. A method as claimed in any one of the preceding claims, wherein the diamond seed crystals have a grain size of 200 to 840 micrometres.

6. A method as claimed in any one of the preceding claims, wherein the solvent metal is an element of Group VIII of the Periodic Table, chromium, manganese or an alloy thereof.

7. A method as claimed in any one of the preceding claims, wherein the solvent metal has a diameter represented by the following relationship:

$$4\sqrt{d_2} > d_1 \geqq 2\sqrt{d_2}$$

wherein $d_1$ = diameter of solvent metal and $d_2$ = diameter of grown crystal.

8. A method as claimed in Claim 3, wherein the separation material is sodium chloride, magnesium oxide, aluminium oxide, aluminium nitride, zirconium oxide or mica.

9. A method as claimed in any one of the preceding claims, wherein the carbon source is graphite plates or graphite powder compacts.


## Patentansprüche

1. Verbesserung eines Verfahrens zur Synthese von Diamanten mit dem dünnen Film eines Lösungsmittelmetalls in einem Reaktionssystem, enthaltend Diamanten-Impfkristalle, eine Kohlenstoffquelle und eine Lösungsmittelmetall, wonach jede Masse des Lösungsmittelmetalls unabhängig von der anderen angeordnet ist und der Diamanten-Impfkristall so angeordnet ist, daß nur eine Oberfläche des Diamanten-Impfkristalls mit der Masse des Lösungsmittelmetalls in Berührung steht.

2. Verfahren nach Anspruch 1, worin die Massen des Lösungsmittelmetalls in der Kohlenstoffquelle verteilt und angeordnet sind.

3. Verfahren nach Anspruch 1, worin der Diamanten-Impfkristall in einem Trennmaterial eingebettet ist, das mit dem Lösungsmittelmetall und der Kohlenstoffquelle nicht reaktiv ist.

4. Verfahren nach Anspruch 1, worin in einem Trennmaterial, das mit dem Lösungsmittelmetall und der Kohlenstoffquelle nicht reaktiv ist, mehrere Reaktionssysteme gestapelt oder geschichtet sind, wobei in jedem dieser Systeme mindestens eine oder mehrere Lösungsmittelmetall-Massen unabhängig voneinander angeordnet sind und die Diamanten-Impfkristalle so angeordnet sind, daß nur eine Oberfläche jedes Diamanten-Impfkristalls mit der jeweiligen Masse des Lösungsmittelmetalls in Berührung steht.

5. Verfahren nach Anspruch 1, worin der Diamanten-Impfkristall eine Korngröße von 200 bis 840µm hat.

6. Verfahren nach Anspruch 1, worin das Lösungsmittelmetall aus der Gruppe, bestehend aus Elementen der Gruppe VIII des Periodensystems, Chrom und Mangan sowie aus deren Legierungen ausgewählt ist.

7. Verfahren nach Anspruch 1, worin das Lösungsmittelmetall einen Durchmesser aufweist, der durch die folgende Beziehung

$$4\sqrt{d_2} > d_1 \geqq 2\sqrt{d_2}$$

dargestellt ist, worin $d_1$ der Durchmesser des Lösungsmittelmetalls und $d_2$ der Durchmesser des gewachsenen Kristalls ist.

8. Verfahren nach Anspruch 3, worin das Trennmaterial aus der Gruppe, bestehend aus Natriumchlorid, Magnesiumoxid, Aluminiumoxid, Aluminiumnitrid, Zirkonoxid und Glimmer, ausgewählt ist.

9. Verfahren nach Anspruch 1, worin die Kohlenstoffquelle aus der Gruppe, bestehend aus Graphitplatten und kompaktiertem Graphitpulver, ausgewählt ist.


## Revendications

1. Procédé pour synthétiser un diamant avec une couche mince d'un métal solvant dans un système de réaction comprenant un germe cristallin de diamant, une source de carbone et un métal solvant, comportant un perfectionnement dans lequel chaque masse du métal solvant est disposée indépendamment des autres et le germe cristallin de diamant est disposé d'une manière telle que seulement une surface du germe cristallin de diamant est en contact avec la masse du métal solvant.

2. Procédé selon la revendication 1, où les masses de métal solvant sont réparties et disposées dans la source de carbone.

3. Procédé selon la revendication 1, où le germe cristallin de diamant est noyé dans un matériau de séparation qui ne réagit pas avec le métal solvant, ni avec la source de carbone.

4. Procédé selon la revendication 1, où plusieurs systèmes de réaction sont empilés ou stratifiés dans un matériau de séparation qui ne réagit pas avec le métal solvant, ni avec la source de carbone, chacun de ces systèmes de réaction comportant au moins une ou plusieurs masses de métal solvant disposées indépendamment les unes des autres et dans lequel les germes cristallins de diamant sont disposés d'une manière telle que seulement une surface de chaque germe cristallin de diamant est en contact avec chaque masse de métal solvant.

5. Procédé selon la revendication 1, où le germe cristallin de diamant a une dimension de grain de 200 à 840 µm.

6. Procédé selon la revendication 1, où le métal solvant est choisi dans le groupe formé d'éléments du groupe VIII du tableau périodique, du chrome et du manganèse et des alliages de ceux-ci.

7. Procédé selon la revendication 1, où le métal solvant a un diamètre qui est représenté par la rela-

tion suivante :

$$4\sqrt{d_2} > d_1 \geqq 2\sqrt{d_2}$$

dans laquelle $d_1$ = diamètre du métal solvant et $d_2$ = diamètre du cristal développé.

8. Procédé selon la revendication 3, où le matériau de séparation est choisi dans le groupe formé du chlorure de sodium, de l'oxyde de magnésium, de l'oxyde d'aluminium, du niture d'aluminium, de l'oxyde de zirconium et du mica.

9. Procédé selon la revendication 1, où la source de carbone est choisie dans le groupe formé de plaques de graphite et d'agglomérés de poudre de graphite.

# F I G. I

# F I G. 2

# F I G. 3